# EUROPEAN PATENT SPECIFICATION

(11) **EP 4 209 316 B1**
(45) Date of publication and mention of the grant of the patent: **04.12.2024**
(21) Application number: 22216789.2
(22) Date of filing: 27.12.2022
(51) Int. Cl.: B25J 15/04

(54) **END-EFFECTOR EXCHANGE DEVICE**
ENDEFFEKTORAUSTAUSCHVORRICHTUNG
DISPOSITIF D'ÉCHANGE D'EFFECTEUR D'EXTRÉMITÉ

(30) Priority: 07.01.2022 JP 2022001601
(43) Date of publication of application: 12.07.2023
(73) Proprietor: SMC Corporation, Tokyo 101-0021 (JP)
(72) Inventor: YUMIBA, Hiroshi, Ibaraki, 300-2493 (JP)
(74) Representative: Keil & Schaafhausen Patentanwälte PartGmbB

(56) References cited:
- EP-B1- 1 993 764
- JP-A- 2020 131 305
- US-A1- 2017 232 620

## Description

### FIELD OF THE INVENTION

The present invention relates to an end-effector exchange device that attaches, in an exchangeable manner, a member such as a tool, a jig, a chuck, a gripper or the like (hereinafter referred to as an "end effector") to a robot arm or a transfer device.

### DESCRIPTION OF THE RELATED ART

Conventionally, a device for detachably attaching an end effector to a robot arm has been known. For example, JP 2020-131305 A discloses a tool exchange device that detachably connects a first connecting member fixed to a robot arm and a second connecting member fixed to a tool member.

In the above-described tool exchange device, when compressed air is supplied to a release chamber of the first connecting member, an output rod integrated with a piston arranged on the first connecting member moves. The output rod is provided with a retraction groove for an engagement ball, and when the output rod moves, the engagement ball can be separated from a receiving surface of the second connecting member. When the first connecting member is raised after the output rod is moved, the first connecting member is separated from the second connecting member.

The tool exchange device includes a second operating rod that engages with an end face of the piston and a first operating rod that engages with the second operating rod. When the supply of compressed air is stopped for maintenance or the like, the piston can be moved and the first connecting member can be separated from the second connecting member by manually operating the first operating rod.

US 2017/0232620 A1 discloses a quick disconnect apparatus that includes a receiver and a coupler that is removably connected to the receiver. The receiver can be connected to the tooling assembly, and the coupler can be connected to the base structure such as a robot arm. The receiver includes a receiver housing and a piston that is disposed within the internal cavity of the receiver housing. The engaging members held in the apertures of the receiver housing is engageable with the first contoured engagement surface and the second contoured engagement surface. When the engaging member is engaged with the second contoured engagement surface, the coupler is connected to the receiver, whereas the engaging member is engaged with the first contoured engagement surface, the connection between the coupler and the receiver is released. The release lever pivotally connected to the receiver can come into contact with the lower end surface of the piston.

### SUMMARY OF THE INVENTION

However, since the tool exchange device above is provided with the operating rod that engages with the end face of the piston, the connecting member must be elongated in the moving direction of the piston, and thus the size of the device is likely to increase.

The present invention has the objective of solving the aforementioned problems.

The present invention is solved by an end-effector exchange device according to claim 1.

Preferred embodiments are evident from the dependent claims.

Because the end-effector exchange device has a separation operation hole into which a release operation tool is inserted, when the supply of air is stopped, the first adapter can be separated from the second adapter manually with the release operation tool. Further, because the release operation tool is configured to be able to abut on a side surface of the cam portion, a configuration necessary for manually separating the first adapter from the second adapter can be compactly arranged while the height of the entire apparatus is reduced as much as possible.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is an external view of an end-effector exchange device according to a first embodiment of the present invention.
FIG. 2 is a cross-sectional view of a first adapter of the end-effector exchange device of FIG. 1.
FIG. 3 is a cross-sectional view of the first adapter of the end-effector exchange device of FIG. 1 cut in a plane different from that of FIG. 2.
FIG. 4 is a cross-sectional view of the first adapter of the end-effector exchange device of FIG. 1 cut in a plane passing through the centers of all engagement balls.
FIG. 5 is a bottom view of the first adapter of the end-effector exchange device of FIG. 1.
FIG. 6 is a cross-sectional view of a second adapter of the end-effector exchange device of FIG. 1.
FIG. 7 is a plan view of the second adapter of the end-effector exchange device of FIG. 1.
FIG. 8 is a cross-sectional view of the end-effector exchange device of FIG. 1 taken along a line VIII-VIII.
FIG. 9 is a cross-sectional view of the end-effector exchange device of FIG. 1 taken along a line IX-IX.
FIG. 10 is a view corresponding to FIG. 8 when a cam member has moved to a retracting end.
FIG. 11 is a view corresponding to FIG. 9 when the cam member has moved to the retracting end by a release operation tool.
FIG. 12 is an external view of an end-effector exchange device according to a second embodiment of the present invention.
FIG. 13 is a cross-sectional view of the end-effector exchange device of FIG. 12.
FIG. 14 is a cross-sectional view of an end-effector exchange device according to a third embodiment of the present invention.

### DESCRIPTION OF THE INVENTION

### (First Embodiment)

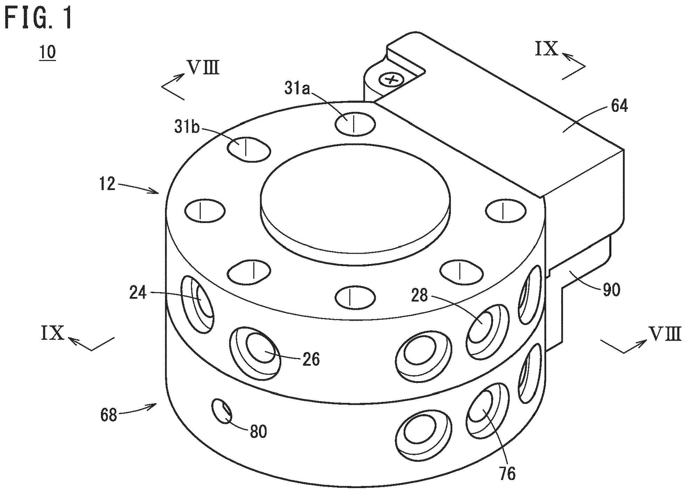

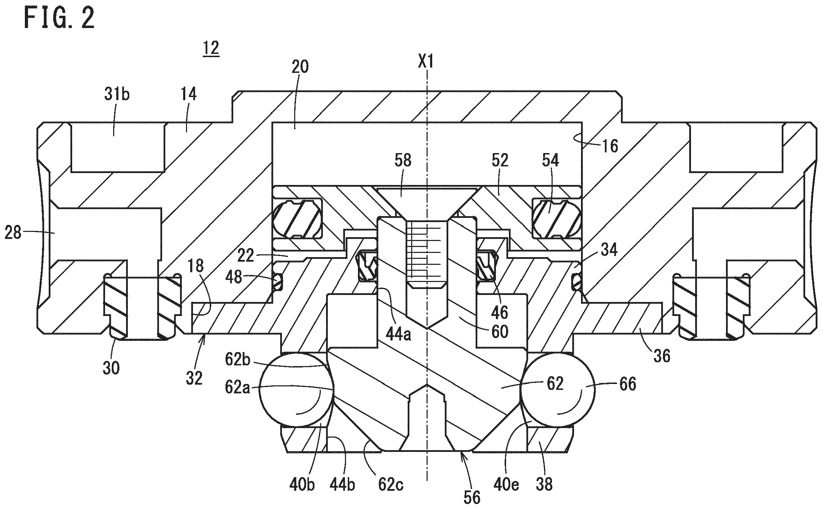

An end-effector exchange device 10 according to a first embodiment of the present invention will be described with reference to FIGS. 1 to 11. As shown in FIG. 1, the end-effector exchange device 10 includes a first adapter 12 attached to a robot arm (not shown) and a second adapter 68 to which an end effector (not shown) is attached. In the following description, when terms relating to up and down directions are used, for the sake of convenience, such terms refer to directions in the drawings including FIGS. 2, 3, 6, and 8 and do not limit the actual arrangement of constituent members or the like.

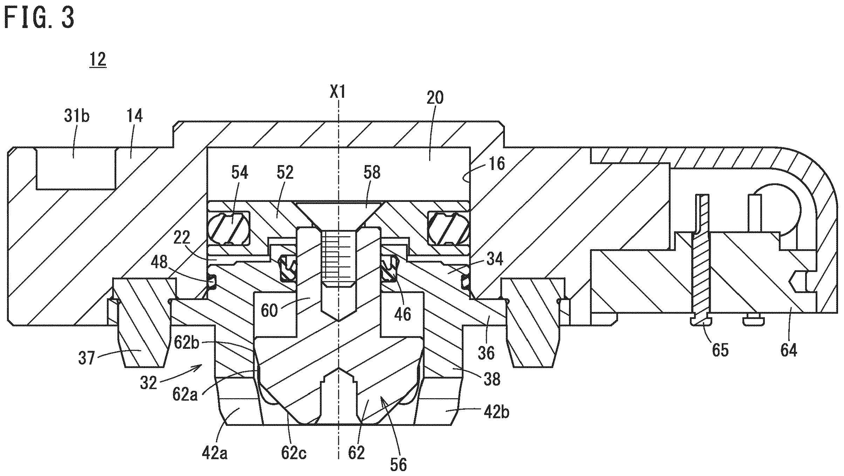

As shown in FIGS. 2 and 3, the first adapter 12 is made up from a first adapter body 14, a clamp base 32, a piston 52, a cam member 56, a first connector 64, and a plurality of engagement balls 66. The first adapter body 14 has a bottomed cylinder hole 16 that opens downward. A recess 18 is formed at the lower end of the first adapter body 14 and extends radially outward from the lower end of the cylinder hole 16.

The clamp base 32 has a fitting portion 34 to be fitted in the cylinder hole 16, a flange portion 36 extending outward from the lower end of the fitting portion 34, and a cylindrical projecting portion 38 extending downward from the lower end of the flange portion 36. The fitting portion 34 of the clamp base 32 is fitted into the cylinder hole 16 of the first adapter body 14. The flange portion 36 of the clamp base 32 is fitted into the recess 18 of the first adapter body 14. The lower end of the cylinder hole 16 is closed by the clamp base 32.

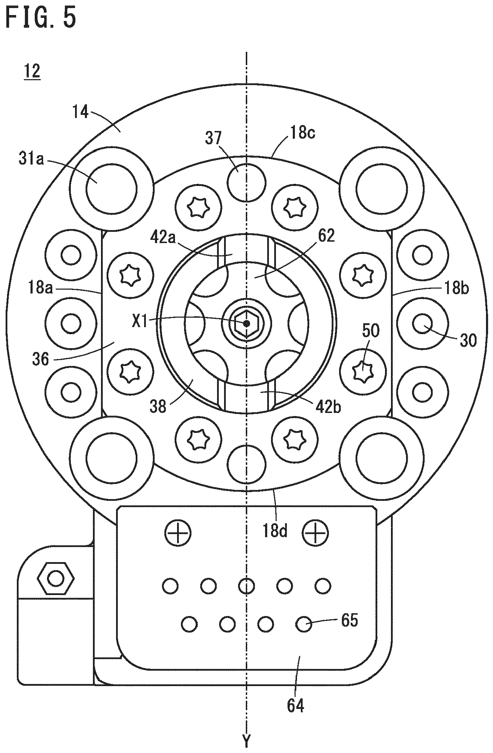

As shown in FIG. 5, the recess 18 of the first adapter body 14 and the flange portion 36 of the clamp base 32 have a quadrangular shape formed by combining two linear sides 18a and 18b and two arcuate sides 18c and 18d when viewed from the direction along the central axis X1 of the first adapter 12. Thus, the clamp base 32 is positioned in the circumferential direction with respect to the first adapter body 14. The clamp base 32 is fixed to the first adapter body 14 using a plurality of bolts 50 inserted into the flange portion 36. The flange portion 36 of the clamp base 32 includes a pair of positioning pins 37 projecting downward.

The piston 52 is arranged in the cylinder hole 16 of the first adapter body 14 in a vertically slidable manner. A piston packing 54 mounted on the piston 52 comes into contact with the wall surface of the cylinder hole 16. A first pressure chamber 20 positioned above the piston 52 and a second pressure chamber 22 positioned below the piston 52 are formed inside the first adapter 12.

The first adapter body 14 has a first port 24 for supplying and discharging air to and from the first pressure chamber 20 and a second port 26 for supplying and discharging air to and from the second pressure chamber 22 (see FIG. 1). The first port 24 and the second port 26 open on a side surface of the first adapter body 14 at positions close to, of the outer periphery of the recess 18 of the first adapter body 14, a portion corresponding to the arcuate side 18c.

The first adapter body 14 has a plurality of fluid ports 28 that open on the side surface of the first adapter body 14. The plurality of fluid ports 28 are disposed close to, of the outer periphery of the recess 18 of the first adapter body 14, portions corresponding to the two linear sides 18a and 18b. Pipes (not shown) are connected to the plurality of fluid ports 28 to supply the fluid the end effector requires. The first adapter body 14 has a plurality of first connection flow paths 30. The first connection flow paths 30 communicate with the fluid ports 28 and open on the lower surface of the first adapter body 14.

The first connector 64 is attached to the first adapter body 14 at a position close to, of the outer periphery of the recess 18 of the first adapter body 14, a portion corresponding to the arcuate side 18d. The first connector 64 is provided with an electrical contact 65 for supplying power the end effector requires. Reference numeral 31a denotes a hole through which a bolt for attaching the first adapter 12 to the robot arm is inserted. Reference numeral 31b denotes a hole through which a pin for positioning the first adapter 12 with respect to the robot arm is inserted (see FIG. 1).

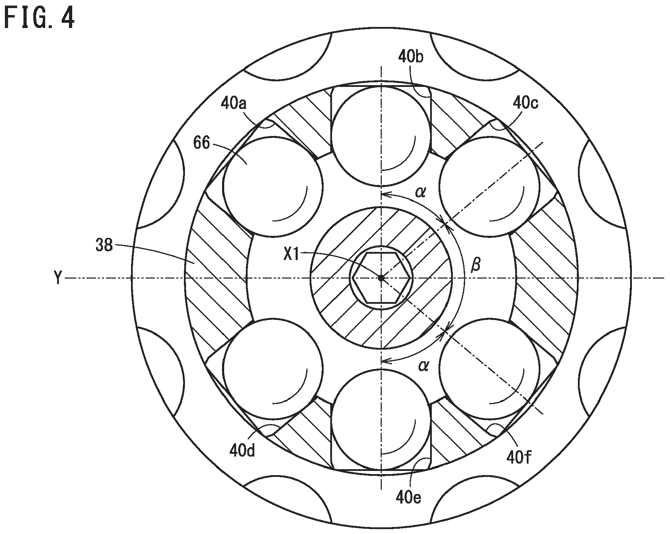

The clamp base 32 has a hole penetrating in the vertical direction. The hole portion of the clamp base 32 is made up from an upper small-diameter hole 44a and a lower large-diameter hole 44b that is continuous with the small-diameter hole 44a via a stepped surface. As shown in FIG. 4, the projecting portion 38 of the clamp base 32 has a plurality of holding holes 40a to 40f penetrating from the outer peripheral surface to the inner peripheral surface. An engagement ball 66 is disposed in each of the holding holes 40a to 40f. The inner diameter of each of the holding holes 40a to 40f reduces in the vicinity of the outer peripheral surface of the projecting portion 38. As a result, the engagement balls 66 arranged in the holding holes 40a to 40f can project outward from the projecting portion 38 without falling off from the outer peripheral surface of the projecting portion 38.

The cam member 56 is coupled to the piston 52 by means of a screw member 58 and extends downward from the piston 52. The cam member 56 is movable in the vertical direction together with the piston 52. The cam member 56 includes an upper shaft portion 60 and a lower cam portion 62 having a diameter larger than that of the shaft portion 60. The shaft portion 60 of the cam member 56 is inserted into the small-diameter hole 44a of the clamp base 32. The cam portion 62 of the cam member 56 is accommodated in the large-diameter hole 44b of the clamp base 32.

A rod packing 46 mounted on the inner periphery of the fitting portion 34 of the clamp base 32 is in sliding contact with the shaft portion 60 of the cam member 56. A seal member 48 attached to the outer periphery of the fitting portion 34 of the clamp base 32 comes into contact with the wall surface of the cylinder hole 16 of the first adapter body 14. The second pressure chamber 22 is kept airtight from the outside by the rod packing 46 and the seal member 48.

The side surface of the cam portion 62 includes a cylindrical surface 62a having a constant radius, a first tapered surface 62b being continuous with the upper part of the cylindrical surface 62a, and a second tapered surface 62c being continuous with the lower part of the cylindrical surface 62a. The first tapered surface 62b is a tapered surface the diameter of which increases upward and forms an acting surface for urging the engagement balls 66 in the projecting direction. The second tapered surface 62c is a tapered surface the diameter of which decreases downward and provides a space into which the engagement balls 66 can be retracted.

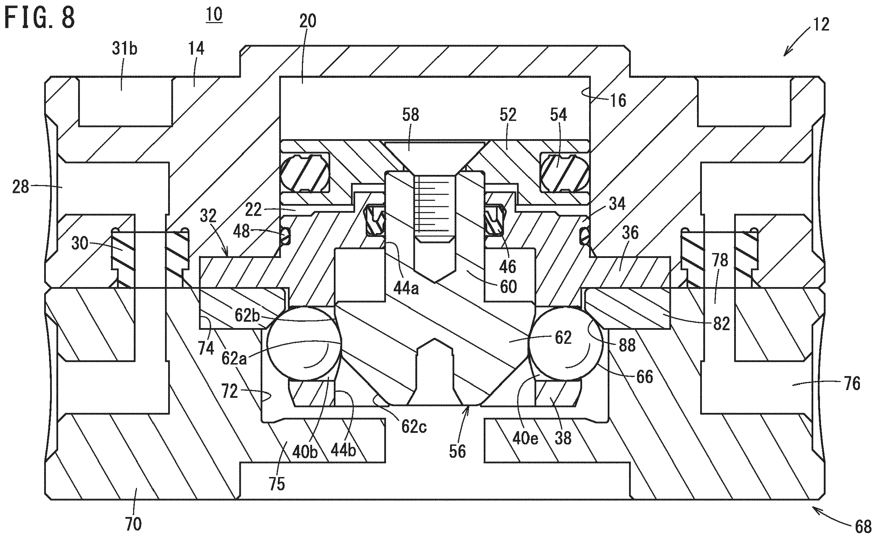

As shown in FIG. 8, when the cam member 56 moves downward to the projecting end (first position), the engagement balls 66 come into contact with the first tapered surface 62b of the cam portion 62 and receives a force directed obliquely outward from the first tapered surface 62b. As a result, the engagement balls 66 are urged so as to project outward from the projecting portion 38 of the clamp base 32.

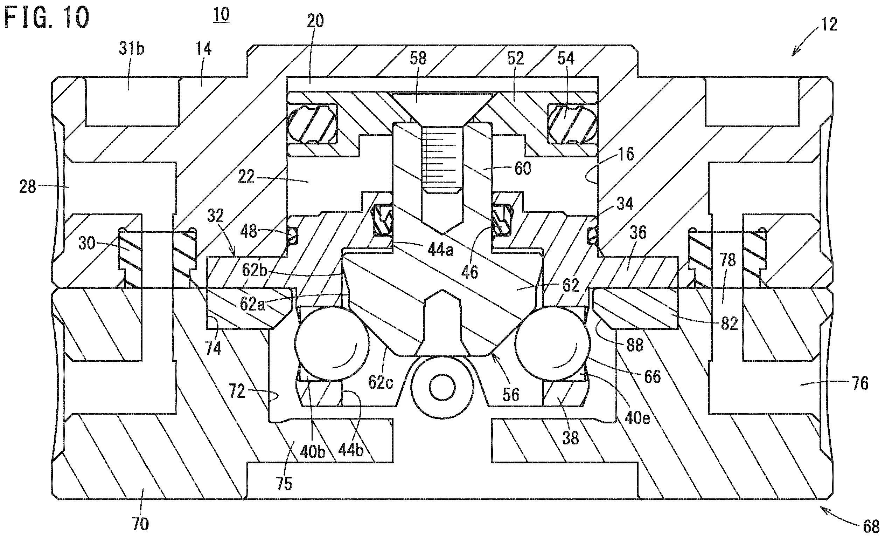

When the cam member 56 moves upward, the engagement balls 66 face the second tapered surface 62c of the cam portion 62 and can be retreated toward the second tapered surface 62c. As shown in FIG. 10, when the cam member 56 moves upward to the retracting end (second position), the engagement balls 66 can be completely retracted to positions where the engagement balls do not project out from the projecting portion 38 of the clamp base 32.

The engagement balls 66 are in contact with the cylindrical surface 62a of the cam portion 62 until the cam member 56 moves upward by a predetermined length from the state in which the cam member 56 is positioned at the projecting end. While the engagement balls 66 are in contact with the cylindrical surface 62a of the cam portion 62, the state in which the engagement balls 66 project out from the projecting portion 38 of the clamp base 32 is maintained.

As shown in FIG. 3, the projecting portion 38 of the clamp base 32 has a pair of notch grooves 42a and 42b at the lower end of the projecting portion 38. Each of the notch grooves 42a and 42b extends from the outer peripheral surface to the inner peripheral surface of the projecting portion 38. As shown in FIG. 5, the pair of notch grooves 42a and 42b are arranged on a straight line Y passing through the central axis X1 of the first adapter 12 when viewed from the direction along the central axis X1.

As shown in FIG. 4, the plurality of holding holes 40a to 40f in the projecting portion 38 of the clamp base 32 are arranged symmetrically with respect to the straight line Y when viewed from the direction along the central axis X1 of the first adapter 12. The plurality of holding holes 40a to 40f are divided into a first group of holding holes 40a to 40c arranged on one side of the straight line Y and a second group of holding holes 40d to 40f arranged on the other side of the straight line Y. The first group of holding holes 40a to 40c and the second group of holding holes 40d to 40f are arranged at equal intervals in the circumferential direction.

The angle defined around the central axis line X1 of the first adapter 12 by the holding holes adjacent to each other in the first group is α. The angle defined around the central axis line X1 of the first adapter 12 by the holding holes adjacent to each other in the second group is α. Further, an angle defined between the first group of holding holes and the second group of holding holes adjacent to each other across the straight line Y with respect to the central axis line X1 of the first adapter 12 is represented by β. The angle β is larger than the angle α.

By setting the angle β to be large to some extent, it is possible to arrange the notch grooves 42a and 42b at positions where the notch grooves 42a and 42b overlap the holding holes 40a to 40f in the vertical direction (height direction). That is, the length (height) of the projecting portion 38 of the clamp base 32 in the vertical direction can be made as short as possible. In this embodiment, the number of the holding holes 40a to 40c in the first group and the number of the holding holes 40d to 40f in the second group are each three. The angle α is about 50 degrees and the angle β is about 80 degrees.

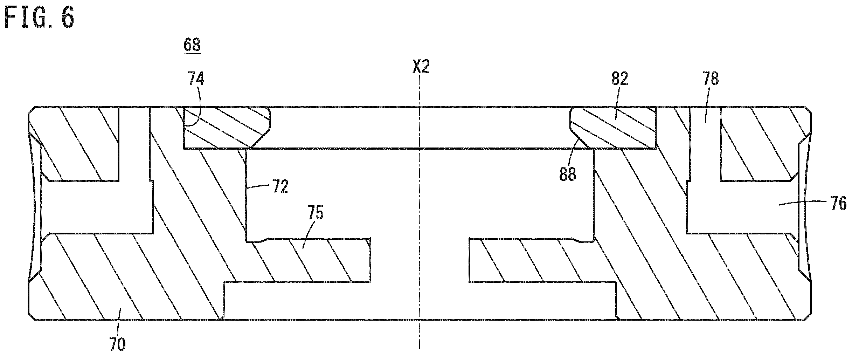

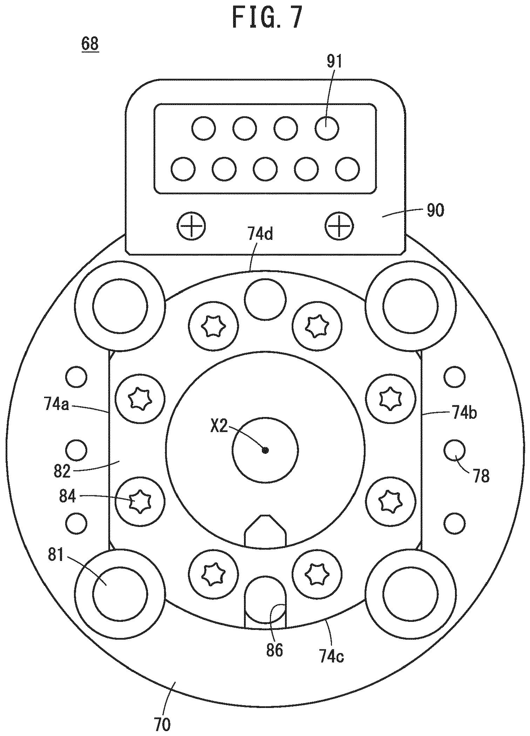

As shown in FIGS. 6 and 7, the second adapter 68 is made up from a second adapter body 70, a clamp plate 82, and a second connector 90. In a state where the second adapter 68 is coupled to the first adapter 12, the central axis X2 of the second adapter 68 coincides with the central axis X1 of the first adapter 12. When viewed from the direction along the central axis X2 of the second adapter 68, the outer shape of the second adapter body 70 coincides with the outer shape of the first adapter body 14 viewed from the direction along the central axis X1 of the first adapter 12.

The second adapter body 70 has a hole 72 penetrating in the vertical direction. An upper portion of the hole 72 expands outward via a stepped surface, whereby a recess 74 is formed at the upper portion of the hole 72. The annular clamp plate 82 fits into the recess 74 of the second adapter body 70 and is secured to the second adapter body 70 with a plurality of bolts 84. The second adapter body 70 includes a flange portion 75 extending inward from the hole 72. The recess 74 of the second adapter body 70 and the clamp plate 82 have a quadrangular shape acquired by combining two linear sides 74a and 74b and two arcuate sides 74c and 74d when viewed from the direction along the central axis X2 of the second adapter 68. Thus, the clamp plate 82 is positioned in the circumferential direction with respect to the second adapter body 70.

The second adapter body 70 has a plurality of fluid ports 76 that open on a side surface of the second adapter body 70. The plurality of fluid ports 76 are disposed close to, of the outer periphery of the recess 74 of the second adapter body 70, portions corresponding to the two linear sides 74a and 74b. The plurality of fluid ports 76 are connected with pipes (not shown) for supplying fluid necessary for the end effector. The second adapter body 70 has a plurality of second connection flow paths 78. The second connection flow path 78 communicates with the fluid port 76 and opens on the upper surface of the second adapter body 70. Each fluid port 28 of the first adapter body 14 communicates with each fluid port 76 of the second adapter body 70 via the first connection flow path 30 and the second connection flow path 78.

The first connection flow paths 30 are disposed close to, of the outer periphery of the recess 18 of the first adapter body 14, portions corresponding to the two linear sides 18a and 18b. In this way, the first connection flow paths 30 can be arranged in wide regions outside the recess 18 of the first adapter body 14. The second connection flow paths 78 are disposed close to, of the outer periphery of the recess 74 of the second adapter body 70, portions corresponding to the two linear sides 74a and 74b. In this way, the second connection flow paths 78 can be arranged in wide regions outside the recess 74 of the second adapter body 70.

A tapered surface (engagement surface) 88 is formed on the inner periphery of the lower surface of the clamp plate 82 so as to be abutted by the engagement balls 66. While the engagement balls 66 is in contact with the tapered surface 88 of the clamp plate 82 from below, the clamp base 32 that holds the engagement balls 66 cannot move upward relative to the second adapter body 70. The clamp plate 82 has a pair of positioning holes 86 on the upper surface of the clamp plate 82. The positioning pin 37 projecting from the flange portion 36 of the clamp base 32 is inserted into the positioning hole 86 of the clamp plate 82.

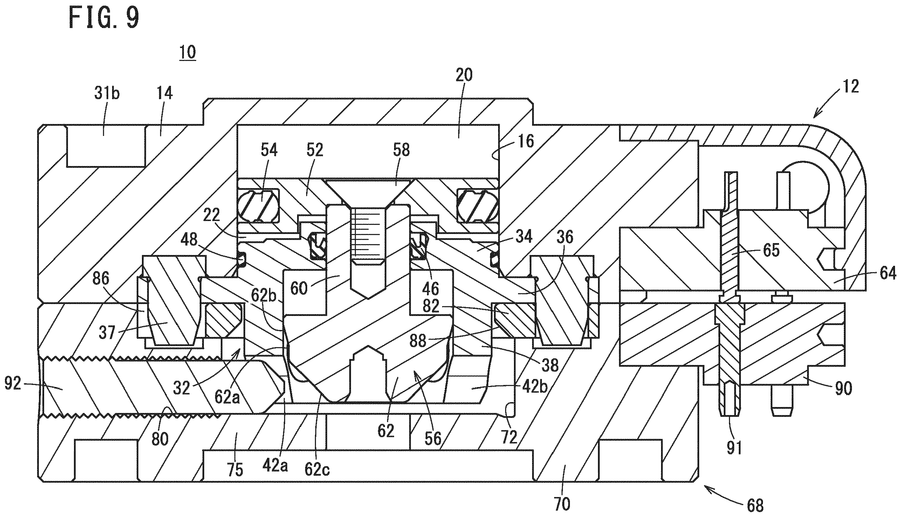

As shown in FIGS. 1 and 9, the second adapter body 70 has a separation operation hole 80 having an internal thread. The separation operation hole 80 opens on a side surface of the second adapter body 70 and extends up to the hole 72 of the second adapter body 70. The separation operation hole 80 is formed at a position corresponding to the notch groove 42a of the projecting portion 38 of the clamp base 32.

As described above, since the notch groove 42a of the clamp base 32 is disposed at a position overlapping the holding holes 40a to 40f in the height direction, it is not necessary to make the second adapter body 70 longer in the vertical direction to form the separation operation hole 80. That is, the height of the second adapter body 70 can be made as low as possible. Thus, the overall height of the end-effector exchange device 10 can be made as low as possible.

A release bolt 92 as a release operation tool is inserted and screwed into the separation operation hole 80. The distal end of the release bolt 92 enters into the notch groove 42a of the clamp base 32. An end portion of the release bolt 92 is supported by the flange portion 75 of the second adapter body 70. When the cam member 56 is at the position where the cam member 56 has moved to the projecting end, the release bolt 92 is rotated and advanced from the side surface of the second adapter 68 by using a tool such as a driver, whereby the distal end of the release bolt 92 can be brought into contact with the second tapered surface 62c of the cam member 56.

The second connector 90 is attached to the second adapter body 70 at a position close to, of the outer periphery of the recess 74 of the second adapter body 70, a portion corresponding to the arcuate side 74d. The second connector 90 is provided with electrical contacts 91 for supplying electric power necessary for the end effector. The electrical contact 91 of the second connector 90 is connected to the electrical contact 65 of the first connector 64.

The second adapter body 70 has bolt insertion holes 81 extending vertically through the second adapter body 70. The end effector is attached to the second adapter body 70 using bolts (not shown) that are inserted from the upper surface of the second adapter body 70 through the bolt insertion hole 81.

Next, an operation of coupling the first adapter 12 to the second adapter 68 by supplying and discharging air will be described. In the initial state, the first adapter 12 attached to a robot arm is separated from the second adapter 68 to which a predetermined end effector has been attached. Further, air has been supplied to the second pressure chamber 22 through the second port 26, and the cam member 56 integrated with the piston 52 has moved to the retracted end (second position).

The robot arm is driven from the initial state so that the projecting portion 38 of the clamp base 32 faces the clamp plate 82. Thereafter, the first adapter 12 is brought close to the second adapter 68 while the central axis X1 of the first adapter 12 is aligned with the central axis X2 of the second adapter 68. The projecting portion 38 of the clamp base 32 passes through a central portion of the annular clamp plate 82 and enters the bore 72 of the second adapter body 70.

At this time, although there is a possibility that the engagement balls 66 held by the clamp base 32 will come into contact with the side surface of the cam portion 62 of the cam member 56 and project out from the projecting portion 38 of the clamp base 32, a force for coupling the first adapter 12 to the second adapter 68 is not generated. This is because the cam member 56 is positioned at the retracting end (second position) and the engagement balls 66 are in a state in which the engagement balls 66 can move freely.

After the projecting portion 38 of the clamp base 32 enters the hole 72 of the second adapter body 70, air is supplied to the first pressure chamber 20 through the first port 24 and air in the second pressure chamber 22 is discharged through the second port 26. As a result, the cam member 56 integrated with the piston 52 moves downward. When the cam member 56 moves downward, the engagement balls 66 are pushed by the second tapered surface 62c of the cam portion 62 and project out from the projecting portion 38 of the clamp base 32.

Thereafter, the engagement balls 66 come into contact with the cylindrical surface 62a of the cam portion 62 and further come into contact with the first tapered surface 62b of the cam portion 62. When the engagement balls 66 come into contact with the first tapered surface 62b, the engagement balls 66 are pushed by the first tapered surface 62b and are strongly sandwiched between the first tapered surface 62b and the tapered surface 88 of the clamp plate 82. In this way, the first adapter 12 is attracted to the second adapter 68.

In this state, even if a force to separate the first adapter 12 from the second adapter 68 is applied, the first adapter 12 does not separate from the second adapter 68. This is because when a force to separate the first adapter 12 from the second adapter 68 is applied, the engagement balls 66 separate from the first tapered surface 62b of the cam portion 62 and come into contact with the cylindrical surface 62a of the cam portion 62 but a further force to move the engagement balls 66 in the retracting direction is not applied. That is, a self-locking state is achieved. In this way, the coupling of the first adapter 12 with the second adapter 68 is completed.

Next, an operation in a case where the first adapter 12 is separated from the second adapter 68 by supplying and discharging air will be described. The first adapter 12 is coupled to the second adapter 68, and work is performed by a robot arm to which a predetermined end effector has been attached. Thereafter, when the end effector is replaced, it is necessary to separate the first adapter 12 from the second adapter 68. This is because attachment and detachment of the end effector to and from the second adapter body 70 are performed by inserting and removing bolts from the upper surface of the second adapter body 70 through the bolt insertion holes 81.

To separate the first adapter 12 from the second adapter 68, air is supplied to the second pressure chamber 22 through the second port 26, and air in the first pressure chamber 20 is discharged through the first port 24. Thus, the cam member 56 integrated with the piston 52 moves to the retracting end, and the engagement balls 66 can be retracted to a position where the engagement balls 66 do not project out from the projecting portion 38 of the clamp base 32 (see FIG. 10). In this state, if a force is applied to separate the first adapter 12 from the second adapter 68, the engagement balls 66 are pushed by the tapered surface 88 of the clamp plate 82 and retracted to a position where the engagement balls 66 do not project out from the projecting portion 38 of the clamp base 32. Thus, the first adapter 12 separates from the second adapter 68.

Next, a case where the first adapter 12 is separated from the second adapter 68 by the operation of the release bolt 92 will be described. It is assumed here that the supply of air for separating the first adapter 12 from the second adapter 68 has stopped, or that the thrust of the piston 52 has been lost due to breakage or the like of the piston packing 54. In this case, the first adapter 12 can be forcibly separated from the second adapter 68 by manually operating the release bolt 92 as explained below.

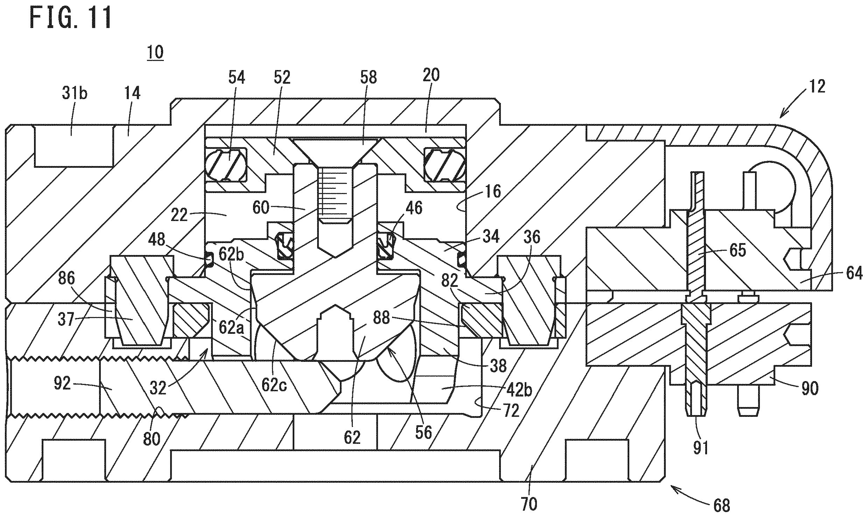

The operator screws the release bolt 92 from the side surface of the second adapter 68 using a tool such as a driver and brings the distal end of the release bolt 92 into contact with the second tapered surface 62c of the cam member 56. At this time, it is desirable to support the second adapter 68 or the end effector in some way so that the second adapter 68 or the end effector does not move. Without such support, when the cam member 56 moves to a position where the engagement balls 66 contact the second tapered surface 62c, a gap is created between the first adapter 12 and the second adapter 68, and the amount the cam member 56 is pushed up by the release bolt 92 is reduced. When the release bolt 92 is further screwed, the cam member 56 can be pushed to the retracted end (see FIG. 11). When the supply of air is stopped, since the pressure of air does not act on the cam member 56 integrated with the piston 52, the force required to operate the release bolt 92 is small.

When the cam member 56 is pushed in to the retracting end, the engagement balls 66 can be retracted to a position where the engagement balls 66 do not project out from the projecting portion 38 of the clamp base 32. In this state, if a force is applied to separate the first adapter 12 from the second adapter 68, the engagement balls 66 are pushed by the tapered surface 88 of the clamp plate 82 and retracted to a position where the engagement balls 66 do not project out from the projecting portion 38 of the clamp base 32. Thus, the first adapter 12 separates from the second adapter 68.

The end-effector exchange device 10 according to the present embodiment has the separation operation hole 80 into which the release bolt 92 is inserted. Therefore, when the supply of air is stopped, the first adapter 12 can be separated from the second adapter 68 by manually operating the release bolt 92. The notch groove 42a of the clamp base 32 is arranged at a position overlapping the holding holes 40a to 40f in the height direction, and the separation operation hole 80 of the second adapter body 70 is formed at a position corresponding to the notch groove 42a. Therefore, the height of the projecting portion 38 of the clamp base 32 can be made as low as possible, and the height of the second adapter body 70 can be made as low as possible. Therefore, the overall height of the end-effector exchange device 10 can be made as low as possible.

### (Second Embodiment)

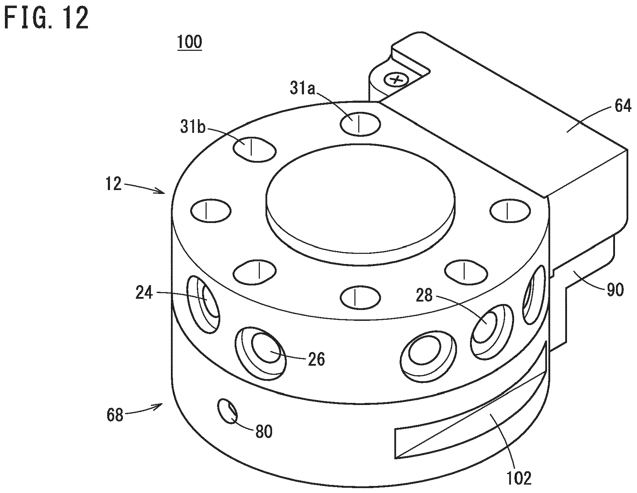

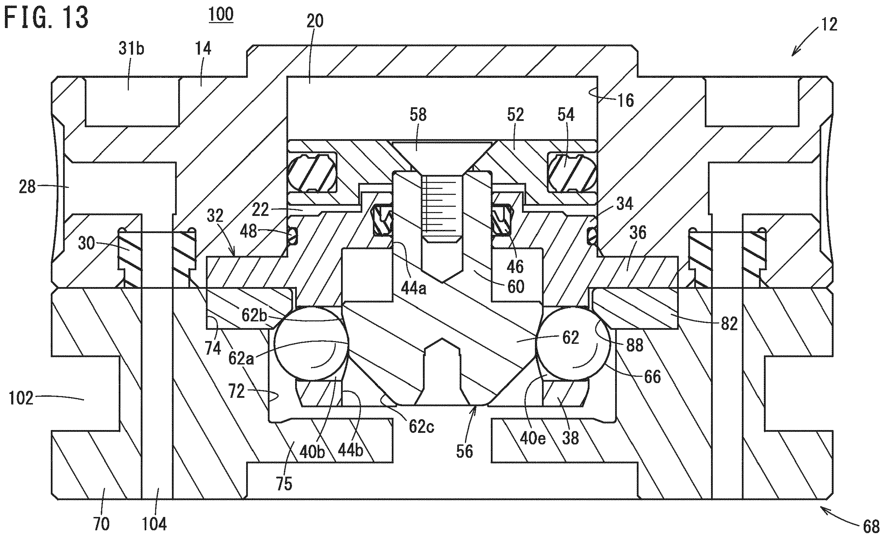

Next, an end-effector exchange device 100 according to a second embodiment of the present invention will be described with reference to FIGS. 12 and 13. For the end-effector exchange device 100 according to the second embodiment, constituent elements thereof, which are the same as those of the end-effector exchange device 10 according to the first embodiment, are denoted by the same reference numerals, and detailed description of such features is omitted.

The second adapter body 70 of the end-effector exchange device 100 has a pair of slits 102 on the side surfaces of the second adapter body 70. The pair of slits 102 are used to support the second adapter 68 on a stand (not shown). The second adapter 68 is supported, for example, on a stand installed on the floor surface in a state in which the central axis line X2 of the second adapter 68 is oriented in the horizontal direction.

The second adapter body 70 has a plurality of connection flow paths 104 for supplying fluid the end effector requires. Each connection flow path 104 penetrates the second adapter body 70 in the vertical direction. Each fluid port 28 of the first adapter body 14 communicates with each connection flow path 104 of the second adapter body 70 via the first connection flow path 30. The second adapter body 70 does not have a fluid port opening on a side surface.

The pair of slits 102 and the plurality of connection flow paths 104 are disposed close to, of the outer periphery of the recess 74 of the second adapter body 70, portions corresponding to two linear sides 74a and 74b. Thus, the pair of slits 102 and the plurality of connection flow paths 104 can be arranged in wide regions on the outer periphery of the recess 74 of the second adapter body 70.

According to the end-effector exchange device 100 according to the present embodiment, in a case where the second adapter body 70 is formed with the pair of slits 102, it is possible to form the slits at a portion of the second adapter body 70, the portion having a sufficient space.

### (Third Embodiment)

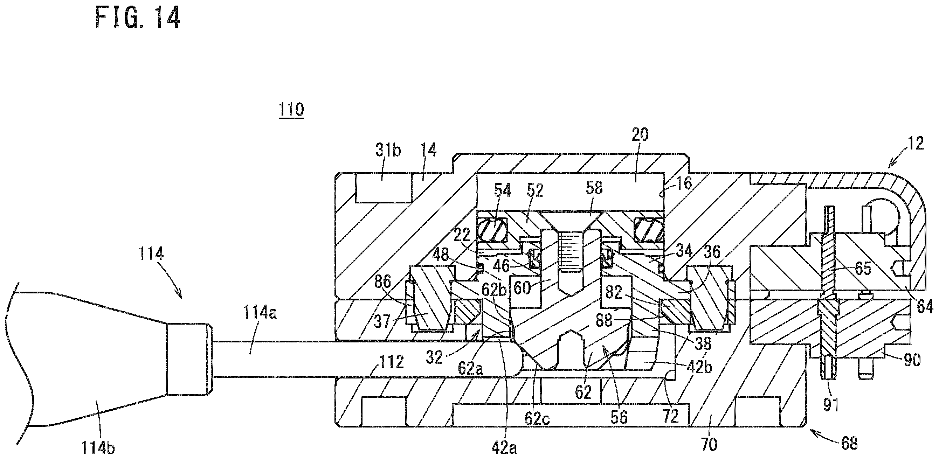

Next, an end-effector exchange device 110 according to a third embodiment of the present invention will be described with reference to FIG. 14. For the end-effector exchange device 110 according to the third embodiment, the same or equivalent components as those of the end-effector exchange device 10 according to the first embodiment are denoted by the same reference numerals, and detailed description thereof is omitted.

The second adapter body 70 has a separation operation hole 112 into which a release rod 114 as a release operation tool is inserted. The separation operation hole 112 is not provided with an internal thread. The separation operation hole 112 opens on a side surface of the second adapter body 70 and extends to the hole 72 of the second adapter body 70. The separation operation hole 112 is formed at a position corresponding to the notch groove 42a of the projecting portion 38 of the clamp base 32. The release rod 114 includes a rod-shaped insertion portion 114a and a grip portion 114b for coaxially coupling and supporting the insertion portion 114a. The distal end of the insertion portion 114a is rounded.

It is assumed here that the supply of air for separating the first adapter 12 from the second adapter 68 has stopped, or that the thrust of the piston 52 has been lost due to breakage or the like of the piston packing 54. In this case, the operator can forcibly separate the first adapter 12 from the second adapter 68 by inserting the release rod 114 into the separation operation hole 112 of the second adapter body 70.

When the release rod 114 is inserted into the separation operation hole 112 of the second adapter body 70, the distal end of the release rod 114 comes into contact with the second tapered surface 62c of the cam member 56. At this time, as in the case of the first embodiment, it is desirable that the second adapter 68 or the end effector is supported in some way so as not to move. When the operator pushes the release rod 114, the cam member 56 can be pushed to the retracted end. When the supply of air is stopped, since the pressure of air does not act on the cam member 56 integrated with the piston 52, only a small force is required to push the release rod 114 inward.

When the cam member 56 is pushed in to the retracting end, the engagement balls 66 can be retracted to a position where the engagement balls 66 do not project out from the projecting portion 38 of the clamp base 32. In this state, if a force is applied to separate the first adapter 12 from the second adapter 68, the engagement balls 66 are pushed by the tapered surface 88 of the clamp plate 82 and retracted to a position where the engagement balls 66 do not project out from the projecting portion 38 of the clamp base 32. Thus, the first adapter 12 separates from the second adapter 68.

According to the end-effector exchange device 110 of the present embodiment, since the separation operation hole 112 is not provided with an internal thread, the separation operation hole 112 can be formed in the second adapter body 70 by a simple drilling process.

## Claims

1. An end-effector exchange device (10, 100, 110) comprising:
a first adapter (12);
a second adapter (68); and
a release operation tool (92, 114),
wherein
the first adapter is attached to the second adapter in a manner that the first adapter is configured to be coupled to and separated from the second adapter,
the first adaptor (12) is configured to be attached to a robot arm or a transfer device,
the second adaptor (68) is configured to be attached to an end effector
the first adapter includes
a piston (52) driven by supply and discharge of air,
a cam member (56) integrally coupled to the piston, and
an engagement ball (66) configured to be in contact with a side surface of a cam portion (62) of the cam member,
in a case where the cam member is in a first position, the engagement ball projects and prevents separation between the first adapter and the second adapter,
in a case where the cam member is in a second position, the engagement ball is retracted and allows separation between the first adapter and the second adapter,
**characterized in that**
the release operation tool (92, 114) is configured to come into contact with the side surface of the cam portion, and
the second adapter (68) includes a separation operation hole (80, 112) into which the release operation tool (92, 114) is inserted.

2. The end-effector exchange device according to claim 1, wherein:
the side surface of the cam member includes
a first tapered surface (62b) with which the engagement ball comes into contact when the cam member is in the first position,
a second tapered surface (62c) that provides a space into which the engagement ball is configured to be completely retracted when the cam member is in the second position, and
a cylindrical surface (62a) that is located between the first tapered surface and the second tapered surface.

3. The end-effector exchange device according to claim 1, wherein:
the first adapter includes
a first adapter body (14), and
a clamp base (32), and
the engagement ball is disposed in a holding hole (40a-40f) of a projecting portion (38) of the clamp base.

4. The end-effector exchange device according to claim 3, wherein
the second adapter includes
a second adapter body (70), and
a clamp plate (82),
the second adapter body includes the separation operation hole, and
the clamp plate includes an engagement surface (88) with which the engagement ball comes into contact.

5. The end-effector exchange device according to claim 4, wherein
the projecting portion of the clamp base includes a pair of notch grooves (42a, 42b) at an end portion of the projecting portion, and
a distal end of the release operation tool enters into one of the pair of notch grooves.

6. The end-effector exchange device according to claim 5, wherein
the pair of notch grooves are arranged on one straight line passing through a central axis line of the first adapter when viewed from a direction along the central axis line of the first adapter,
the projecting portion includes a plurality of holding holes,
the engagement ball is arranged in each of the holding holes,
the holding holes are arranged symmetrically with respect to the straight line when viewed from the direction along the central axis line of the first adapter, and
holding holes (40a-40c) arranged on one side of the straight line form a first group, holding holes (40d-40f) arranged on the other side of the straight line form a second group, the holding holes (40a-40c) in the first group are arranged evenly in a circumferential direction, and the holding holes (40d-40f) in the second group are arranged evenly in the circumferential direction.

7. The end-effector exchange device according to claim 6, wherein
an angle (β) formed around the central axis line (X1) of the first adapter (12) by the first group of holding holes (40c) and the second group of holding holes (40f) adjacent to each other across the straight line (Y) is larger than an angle (α) formed around the central axis line (X1) of the first adapter (12) by the holding holes (40a-40c) adjacent to each other in the first group.

8. The end-effector exchange device according to claim 7, wherein
when viewed from the direction along the central axis line of the first adapter, a recess (18) of the first adapter body into which the clamp base is fitted has a quadrangular shape obtained by combining two linear sides (18a, 18b) and two arcuate sides (18c, 18d),
the first adapter body includes a fluid port (28) opening on a side surface of the first adapter body at a position close to a portion of the recess corresponding to the two linear sides (74a, 74b), and
when viewed from a direction along a central axis line of the second adapter, a recess (74) of the second adapter body into which the clamp plate is fitted has a quadrangular shape obtained by combining two linear sides (74a, 74b) and two arcuate sides (74c, 74d),
the second adapter body includes a fluid port (76) opening on a side surface of the second adapter body at a position close to a portion of the recess corresponding to the two linear sides, and
the fluid port of the first adapter body communicates with the fluid port of the second adapter body.

9. The end-effector exchange device according to claim 7, wherein
when viewed from the direction along the central axis line of the first adapter, a recess of the first adapter body into which the clamp base is fitted has a quadrangular shape obtained by combining two linear sides and two arcuate sides,
the first adapter body includes a fluid port opening on a side surface of the first adapter body at a position close to a portion of the recess corresponding to the two linear sides,
when viewed from a direction along a central axis line of the second adapter, a recess of the second adapter body into which the clamp plate is fitted has a quadrangular shape obtained by combining two linear sides and two arcuate sides, and
the second adapter body includes a slit (102) on a side surface close to the portion of the recess corresponding to the two linear sides.

10. The end-effector exchange device according to claim 8 or 9, wherein
the first adapter body includes a first port (24) and a second port (26) that supply air to and discharge air from two pressure chambers (20, 22) partitioned by the piston, and
the first port and the second port are arranged close to, of an outer periphery of the recess of the first adaptor body, a portion corresponding to one of the arcuate sides.

11. The end-effector exchange device according to claim 8 or 9, wherein
a first connector (64) is attached to the first adapter body at a position close to, of an outer periphery of the recess of the first adapter body, a portion corresponding to one of the arcuate sides,
a second connector (90) is attached to the second adapter body at a position close to, of an outer periphery of the recess of the second adapter body, a portion corresponding to one of the arcuate sides, and
the electrical contact (65) of the first connector is connected to an electrical contact (91) of the second connector.

12. The end-effector exchange device according to claim 1, wherein
the separation operation hole is provided with an internal thread, and
the release operation tool is a release bolt (92) screwed into the separation operation hole.

13. The end-effector exchange device according to claim 1, wherein
the release operation tool is a release rod (114).

## Patentansprüche

1. End-Effektor-Wechselvorrichtung (10, 100, 110), umfassend:
einen ersten Adapter (12);
einen zweiten Adapter (68); und
ein Freigabewerkzeug (92, 114),
wobei
der erste Adapter an dem zweiten Adapter in einer Weise angebracht ist, dass der erste Adapter so konfiguriert ist, dass er mit dem zweiten Adapter gekoppelt und von diesem getrennt werden kann,
der erste Adapter (12) so konfiguriert ist, dass er an einem Roboterarm oder einer Übertragungsvorrichtung angebracht werden kann,
der zweite Adapter (68) so konfiguriert ist, dass er an einem Endeffektor angebracht werden kann
der erste Adapter folgendes aufweist:
einen Kolben (52), der durch Zufuhr und Ablassen von Luft angetrieben wird,
ein Nockenelement (56), das integral mit dem Kolben gekoppelt ist, und
eine Eingriffskugel (66), die so konfiguriert ist, dass sie mit einer Seitenfläche eines Nockenabschnitts (62) des Nockenelements in Kontakt steht,
wobei in einem Fall, in dem sich das Nockenelement in einer ersten Position befindet, die Eingriffskugel hervorsteht und eine Trennung zwischen dem ersten Adapter und dem zweiten Adapter verhindert,
wobei in einem Fall, in dem sich das Nockenelement in einer zweiten Position befindet, die Eingriffskugel zurückgezogen ist und eine Trennung zwischen dem ersten Adapter und dem zweiten Adapter ermöglicht,
**dadurch gekennzeichnet, dass**
das Freigabewerkzeug (92, 114) so konfiguriert ist, dass es mit der Seitenfläche des Nockenabschnitts in Kontakt kommt, und
der zweite Adapter (68) eine Trennarbeitsöffnung (80, 112) umfasst, in die das Freigabewerkzeug (92, 114) eingeführt wird.

2. Die End-Effektor-Wechselvorrichtung gemäß Anspruch 1, wobei:
die Seitenfläche des Nockenelements
eine erste konische Fläche (62b), mit der die Eingriffskugel in Kontakt kommt, wenn sich das Nockenelement in der ersten Position befindet,
eine zweite konische Fläche (62c), die einen Raum bereitstellt, in den die Eingriffskugel vollständig zurückgezogen werden kann, wenn sich das Nockenelement in der zweiten Position befindet, und
eine zylindrische Fläche (62a), die sich zwischen der ersten konischen Fläche und der zweiten konischen Fläche befindet, aufweist.

3. Die End-Effektor-Wechselvorrichtung nach Anspruch 1, wobei:
der erste Adapter
einen ersten Adapterkörper (14) und
eine Klemmbasis (32) umfasst, und
die Eingriffskugel in einem Aufnahmeloch (40a-40f) eines vorstehenden Abschnitts (38) der Klemmbasis angeordnet ist.

4. Die End-Effektor-Wechselvorrichtung nach Anspruch 3, wobei
der zweite Adapter
einen zweiten Adapterkörper (70) und
eine Klemmplatte (82) umfasst,
der zweite Adapterkörper die Trennarbeitsöffnung umfasst und
die Klemmplatte eine Eingriffsfläche (88) umfasst, mit der die Eingriffskugel in Kontakt kommt.

5. Die End-Effektor-Wechselvorrichtung gemäß Anspruch 4, wobei
der vorstehende Abschnitt der Klemmbasis ein Paar von Kerbnuten (42a, 42b) an einem Endabschnitt des vorstehenden Abschnitts umfasst und
ein distales Ende des Freigabewerkzeugs in eine Kerbnut des Paars von Kerbnuten eintritt.

6. Die End-Effektor-Wechselvorrichtung gemäß Anspruch 5, wobei
das Paar von Kerbnuten auf einer geraden Linie angeordnet ist, die durch eine Mittelachsenlinie des ersten Adapters verläuft, wenn von einer Richtung entlang der Mittelachsenlinie des ersten Adapters aus gesehen,
der vorstehende Abschnitt eine Vielzahl von Haltelöchern umfasst,
die Eingriffskugel in jedem der Haltelöcher angeordnet ist,
die Haltelöcher symmetrisch in Bezug auf die gerade Linie angeordnet sind, wenn sie aus der Richtung entlang der Mittelachsenlinie des ersten Adapters betrachtet werden, und
die Haltelöcher (40a-40c), die auf einer Seite der geraden Linie angeordnet sind, eine erste Gruppe bilden, die Haltelöcher (40d-40f), die auf der anderen Seite der geraden Linie angeordnet sind, eine zweite Gruppe bilden, die Haltelöcher (40a-40c) in der ersten Gruppe gleichmäßig in Umfangsrichtung angeordnet sind und die Haltelöcher (40d-40f) in der zweiten Gruppe gleichmäßig in Umfangsrichtung angeordnet sind.

7. Die End-Effektor-Wechselvorrichtung gemäß Anspruch 6, wobei
ein Winkel (β), der um die Mittelachsenlinie (X1) des ersten Adapters (12) durch die erste Gruppe von Haltelöchern (40c) und die zweite Gruppe von Haltelöchern (40f) gebildet wird, die über die gerade Linie (Y) nebeneinander liegen, größer ist als ein Winkel (α), der um die Mittelachsenlinie (X1) des ersten Adapters (12) durch die Haltelöcher (40a-40c) gebildet wird, die in der ersten Gruppe nebeneinander liegen.

8. Die End-Effektor-Wechselvorrichtung gemäß Anspruch 7, wobei
bei Betrachtung aus der Richtung entlang der Mittelachsenlinie des ersten Adapters eine Aussparung (18) des ersten Adapterkörpers, in die die Klemmbasis eingepasst ist, eine viereckige Form aufweist, die durch Kombination von zwei linearen Seiten (18a, 18b) und zwei bogenförmigen Seiten (18c, 18d) erhalten wird,
der erste Adapterkörper einen Fluidanschluss (28) umfasst, der sich an einer Seitenfläche des ersten Adapterkörpers an einer Position in der Nähe eines Abschnitts der Aussparung öffnet, der den zwei linearen Seiten (74a, 74b) entspricht, und
bei Betrachtung aus einer Richtung entlang einer zentralen Achsenlinie des zweiten Adapters eine Aussparung (74) des zweiten Adapterkörpers, in die die Klemmplatte eingepasst ist, eine viereckige Form aufweist, die durch Kombination von zwei linearen Seiten (74a, 74b) und zwei bogenförmigen Seiten (74c, 74d) erhalten wird,
der zweite Adapterkörper einen Fluidanschluss (76) aufweist, der sich an einer Seitenfläche des zweiten Adapterkörpers an einer Position in der Nähe eines Abschnitts der Aussparung öffnet, der den zwei linearen Seiten entspricht, und
der Fluidanschluss des ersten Adapterkörpers mit dem Fluidanschluss des zweiten Adapterkörpers in Verbindung steht.

9. Die End-Effektor-Wechselvorrichtung gemäß Anspruch 7, wobei
bei Betrachtung aus der Richtung entlang der zentralen Achsenlinie des ersten Adapters eine Aussparung des ersten Adapterkörpers, in die die Klemmbasis eingepasst ist, eine viereckige Form aufweist, die durch Kombination von zwei geradlinigen Seiten und zwei bogenförmigen Seiten erhalten wird,
der erste Adapterkörper eine Fluidanschlussöffnung an einer Seitenfläche des ersten Adapterkörpers an einer Position nahe einem Abschnitt der Aussparung, der den zwei linearen Seiten entspricht, umfasst,
eine Aussparung des zweiten Adapterkörpers, in die die Klemmplatte eingepasst ist, bei Betrachtung aus einer Richtung entlang einer Mittelachsenlinie des zweiten Adapters eine viereckige Form aufweist, die durch Kombination von zwei linearen Seiten und zwei bogenförmigen Seiten erhalten wird, und
der zweite Adapterkörper einen Schlitz (102) auf einer Seitenfläche nahe dem Abschnitt der Aussparung umfasst, der den zwei linearen Seiten entspricht.

10. Die Endeffektor-Wechselvorrichtung gemäß Anspruch 8 oder 9, wobei
der erste Adapterkörper einen ersten Anschluss (24) und einen zweiten Anschluss (26) umfasst, die Luft zu zwei Druckkammern (20, 22), die durch den Kolben getrennt sind, zuführen und Luft aus diesen abführen, und
der erste Anschluss und der zweite Anschluss nahe an einem Außenumfang der Aussparung des ersten Adapterkörpers angeordnet sind, wobei ein Abschnitt einer der bogenförmigen Seiten entspricht.

11. Die Endeffektor-Wechselvorrichtung gemäß Anspruch 8 oder 9, wobei
ein erster Verbinder (64) an dem ersten Adapterkörper an einer Position, von einem Außenumfang der Aussparung des ersten Adapterkörpers, nahe bei einem Abschnitt, der einer der bogenförmigen Seiten entspricht, angebracht ist,
ein zweiter Verbinder (90) an dem zweiten Adapterkörper an einer Position, von einem Außenumfang der Aussparung des zweiten Adapterkörpers, nahe bei einem Abschnitt, der einer der bogenförmigen Seiten entspricht, angebracht ist, und der elektrische Kontakt (65) des ersten Verbinders mit einem elektrischen Kontakt (91) des zweiten Verbinders verbunden ist.

12. Die End-Effektor-Wechselvorrichtung nach Anspruch 1, wobei
das Trennarbeitsloch mit einem Innengewinde versehen ist und
das Freigabearbeitswerkzeug ein Freigabebolzen (92) ist, der in das Trennarbeitsloch eingeschraubt ist.

13. Die End-Effektor-Wechselvorrichtung nach Anspruch 1, wobei
das Freigabearbeitswerkzeug eine Freigabestange (114) ist.

## Revendications

1. Dispositif d'échange d'effecteur d'extrémité (10, 100, 110) comprenant :
un premier adaptateur (12) ;
un deuxième adaptateur (68) ; et
un outil d'actionnement de libération (92, 114),
dans lequel
le premier adaptateur est fixé au deuxième adaptateur de telle façon que le premier adaptateur est configuré pour être accouplé au deuxième adaptateur et séparé de celui-ci,
le premier adaptateur (12) est configuré pour être fixé à un bras de robot ou à un dispositif de transfert,
le deuxième adaptateur (68) est configuré pour être fixé à un effecteur d'extrémité,
le premier adaptateur inclut
un piston (52) entraîné par l'alimentation et la décharge d'air,
un élément de came (56) accouplé de façon intégrale au piston, et
une bille d'engagement (66) configuré pour être en contact avec une surface latérale d'une partie de came (62) de l'élément de came,
dans un cas où l'élément de came est dans une première position, la bille d'engagement fait saillie et empêche la séparation entre le premier adaptateur et le deuxième adaptateur,
dans un cas où l'élément de came est dans une deuxième position, la bille d'engagement est rétractée et permet la séparation entre le premier adaptateur et le deuxième adaptateur,
**caractérisé en ce que**
l'outil d'actionnement de libération (92, 114) est configuré pour venir en contact avec la surface latérale de la partie de came, et
le deuxième adaptateur (68) inclut un trou d'actionnement de séparation (80, 112) dans lequel est inséré l'outil d'actionnement de libération (92, 114).

2. Dispositif d'échange d'effecteur d'extrémité selon la revendication 1, dans lequel :
la surface latérale de l'élément de came inclut
une première surface effilée (62b) avec laquelle la bille d'engagement entre en contact lorsque l'élément de came se trouve dans la première position,
une deuxième surface effilée (62c) fournissant un espace dans lequel la bille d'engagement est configurée pour se rétracter complètement lorsque l'élément de came se trouve dans la deuxième position, et
une surface cylindrique (62a) située entre la première surface effilée et la deuxième surface effilée.

3. Dispositif d'échange d'effecteur d'extrémité selon la revendication 1, dans lequel :
le premier adaptateur inclut
un premier corps d'adaptateur (14), et
une base de serrage (32), et
la bille d'engagement est disposée dans un trou de maintien (40a-40f) d'une partie saillante (38) de la base de serrage.

4. Dispositif d'échange d'effecteur d'extrémité selon la revendication 3, dans lequel
le deuxième adaptateur inclut
une deuxième corps d'adaptateur (70), et
une plaque de serrage (82),
le deuxième corps d'adaptateur inclut le trou d'actionnement de séparation, et
la plaque de serrage inclut une surface d'engagement (88) avec laquelle la bille d'engagement entre en contact.

5. Dispositif d'échange d'effecteur d'extrémité selon la revendication 4, dans lequel
la partie saillante de la base de serrage inclut une paire des rainures d'encoche (42a, 42b) au niveau d'une partie d'extrémité de la partie saillante, et
une extrémité distale de l'outil d'actionnement de libération entre dans l'une parmi la paire de rainures d'encoche.

6. Dispositif d'échange d'effecteur d'extrémité selon la revendication 5, dans lequel
la paire de rainures d'encoche sont disposées sur une ligne droite traversant une ligne d'axe central du premier adaptateur, vues depuis une direction le long de la ligne d'axe central du premier adaptateur,
la partie saillante inclut une pluralité de trous de maintien,
la bille d'engagement est disposée dans chacun des trous de maintien,
les trous de maintien sont disposés symétriquement par rapport à la ligne droite, vus depuis la direction le long de la ligne d'axe central du premier adaptateur, et
des trous de maintien (40a-40c) disposés d'un côté de la ligne droite forment un premier groupe, des trous de maintien (40d-40f) disposés de l'autre côté de la ligne droite forment un deuxième groupe, les trous de maintien (40a-40c) dans le premier groupe sont disposés de façon régulière dans une direction circonférentielle, et les trous de maintien (40d-40f) dans le deuxième groupe sont disposés de façon régulière dans la direction circonférentielle.

7. Dispositif d'échange d'effecteur d'extrémité selon la revendication 6, dans lequel
un angle (β) formé autour de la ligne d'axe central (X1) du premier adaptateur (12) par le premier groupe de trous de maintien (40c) et le deuxième groupe de trous de maintien (40f) adjacents les uns aux autres à travers la ligne droite (Y) est supérieur à un angle (α) formé autour de la ligne d'axe central (X1) du premier adaptateur (12) par les trous de maintien (40a-40c) adjacents les uns aux autres dans le premier groupe.

8. Dispositif d'échange d'effecteur d'extrémité selon la revendication 7, dans lequel
vue depuis la direction le long de la ligne d'axe central du premier adaptateur, une cavité (18) du premier corps d'adaptateur dans laquelle la base de serrage est ajustée présente une forme quadrangulaire obtenue en combinant deux côtés linéaires (18a, 18b) et deux côtés arqués (18c, 18d),
le premier corps d'adaptateur inclut un orifice de fluide (28) débouchant sur une surface latérale du premier corps d'adaptateur à une position proche d'une partie de la cavité correspondant aux deux côtés linéaires (74a, 74b), et
vue depuis une direction le long d'une ligne d'axe central du deuxième adaptateur, une cavité (74) du deuxième corps d'adaptateur dans laquelle la plaque de serrage est ajustée présente une forme quadrangulaire obtenue en combinant deux côtés linéaires (74a, 74b) et deux côtés arqués (74c, 74d),
le deuxième corps d'adaptateur inclut un orifice de fluide (76) débouchant sur une surface latérale du deuxième corps d'adaptateur à une position proche d'une partie de la cavité correspondant aux deux côtés linéaires, et
l'orifice de fluide du premier corps d'adaptateur communique avec l'orifice de fluide du deuxième corps d'adaptateur.

9. Dispositif d'échange d'effecteur d'extrémité selon la revendication 7, dans lequel
vue depuis la direction le long de la ligne d'axe central du premier adaptateur, une cavité du premier corps d'adaptateur dans laquelle la base de serrage est ajustée présente une forme quadrangulaire obtenue en combinant deux côtés linéaires et deux côtés arqués,
le premier corps d'adaptateur inclut un orifice de fluide débouchant sur une surface latérale du premier corps d'adaptateur à une position proche d'une partie de la cavité correspondant aux deux côtés linéaires,
vue depuis une direction le long d'une ligne d'axe central du deuxième adaptateur, une cavité du deuxième corps d'adaptateur dans laquelle la plaque de serrage est ajustée présente une forme quadrangulaire obtenue en combinant deux côtés linéaires et deux côtés arqués, et
le deuxième corps d'adaptateur inclut une fente (102) dans une surface latérale à proximité de la partie de la cavité correspondant aux deux côtés linéaires.

10. Dispositif d'échange d'effecteur d'extrémité selon la revendication 8 ou 9, dans lequel
le premier corps d'adaptateur inclut un premier orifice (24) et un deuxième orifice (26) alimentant de l'air vers deux chambres de pression (20, 22) divisées par le piston et déchargeant de l'air à partir de celles-ci, et
le premier orifice et le deuxième orifice sont disposés à proximité d'une partie correspondant à l'un des côtés arqués, d'une périphérie extérieure de la cavité du premier corps d'adaptateur.

11. Dispositif d'échange d'effecteur d'extrémité selon la revendication 8 ou 9, dans lequel
un premier connecteur (64) est fixé au premier corps d'adaptateur à une position proche d'une partie correspondant à l'un des côtés arqués, d'une périphérie extérieure de la cavité du premier corps d'adaptateur,
un deuxième connecteur (90) est fixé au deuxième corps d'adaptateur à une position proche d'une partie correspondant à l'un des côtés arqués, d'une périphérie extérieure de la cavité du deuxième corps d'adaptateur,
le contact électrique (65) du premier connecteur est connecté à un contact électrique (91) du deuxième connecteur.

12. Dispositif d'échange d'effecteur d'extrémité selon la revendication 1, dans lequel
le trou d'actionnement de séparation est doté d'un filetage intérieur, et
l'outil d'actionnement de libération est un boulon de libération (92) vissé dans le trou d'actionnement de séparation.

13. Dispositif d'échange d'effecteur d'extrémité selon la revendication 1, dans lequel
l'outil d'actionnement de libération est une tige de libération (114).
